Europäisches Patentamt

European Patent Office

Office européen des brevets

(19)

(11) Veröffentlichungsnummer: **0 454 016 A2**

# EUROPÄISCHE PATENTANMELDUNG

(21) Anmeldenummer: 91106416.0

(51) Int. Cl.5: **H01R 9/26**

(22) Anmeldetag: **22.04.91**

(30) Priorität: **26.04.90 DE 4013223**

(43) Veröffentlichungstag der Anmeldung:
**30.10.91 Patentblatt 91/44**

(84) Benannte Vertragsstaaten:
**BE CH DE ES FR GB IT LI**

(71) Anmelder: **ABB PATENT GmbH**
**Kallstadter Strasse 1**
**W-6800 Mannheim 31(DE)**

(72) Erfinder: **Leible, Erwin**
**Michelberg**
**W-6932 Hirschhorn(DE)**

(74) Vertreter: **Rupprecht, Klaus, Dipl.-Ing. et al**
**c/o ABB Patent GmbH, Patentabteilung,**
**Postfach 10 03 51**
**W-6800 Mannheim 1(DE)**

(54) **Auf einer Normprofiltragschiene befestigbare Netzklemme.**

(57) Auf einer Normprofiltragschiene befestigbare, neben einer Anreihung von elektrischen Installationsschaltgeräten angeordnete Netz- oder Einspeiseklemme, mit wenigstens innerhalb eines Gehäuses quer zur Tragschiene und zur Anreihrichtung verlaufenden Verbindungsschiene, an deren einem Ende je eine Anschlußklemme und an deren anderem Ende je eine in Anreihrichtung verlaufende Stromschiene mit wenigstens einer Anschlußfahne für ein Schaltgerät vorgesehen ist, wobei in jedem Gehäuse eine der Anzahl der Phasen entsprechende Anzahl von Verbindungsschienen voneinander isoliert übereinander angeordnet sind, und an jeder Verbindungsschiene je eine Stromschiene angebracht ist, so daß eine der Anzahl der Verbindungsschienen entsprechende Anzahl von Stromschienen auf einer Seite der Reihe der Schaltgeräte übereinander angeordnet ist, wobei die Stromschienen so abgekröpft sind, daß ihre Anschlußfahnen zum Schaltgerät in einer Ebene liegen, und daß zusätzlich auch auf der Seite der Einspeiseklemme, auf der die Stromschienen liegen, jeder Verbindungsschiene eine weitere Anschlußklemme zugeordnet ist.

Fig. 1

Die Erfindung betrifft eine auf einer Normprofiltragschiene befestigbare Netzklemme nach dem Oberbegriff des Anspruches 1.

Diese Netzklemmen dienen zur zugangsseitigen Verdrahtung und sollen den Strom von der zugangsseitigen Verdrahtung auf einzelne ein- oder mehrpolige in einer Verteilung befindliche Installationsschaltgeräte oder Installationsgeräte verteilen.

Einspeiseklemmen als solche sind an sich bekannt. Sie sind gebildet aus einem elektrisch isolierenden Gehäuse, in dem eine Anschlußklemme untergebracht ist; das Gehäuse und die Anschlußklemme innerhalb des Gehäuses sind so ausgebildet, daß auf der einen Seite Kabel und auf der anderen Seite Stromsammelschienen anschließbar sind. Die bekannte Einspeiseklemme ist als solche eine einpolige Einspeiseklemme, die aufgrund einer geeigneten Ausgestaltung des Gehäuses zu mehreren zusammengesetzt werden kann und so eine mehrpolige Einspeiseklemme bildet. Die Einspeiseklemme wird fixiert an einer Stromsammelschiene oder an einem Sammelschienenblock, dessen Anschlußfahnen mit den einzelnen Installationsgeräten verbunden sind.

Aus der EP-A 0 112 232 ist eine Netz- oder Einspeiseklemme bekannt geworden, die ein Gehäuse aufweist, das auf einer Hutprofilschiene aufschnappbar ist. Innerhalb des Gehäuses, welches parallel zu den daran anschließenden Schaltgeräten verläuft, ist eine Verbindungsschiene angeordnet, an deren einem Ende eine Anschlußklemme oder ggf. auch zwei Anschlußklemmen vorgesehen sind, wogegen am anderen Ende der Verbindungsschiene eine Stromsammelschiene angeschlossen werden kann. Die Stromsammelschienen besitzen dabei Anschlußfahnen mit unterschiedlicher Abkröpfung, so daß die Sammelschienen für unterschiedliche Phasen in unterschiedlicher Höhe liegen. Demgemäß sind die einzelnen Netzklemmen für die einzelnen Sammelschienen so ausgebildet, daß sie unterschiedliche Formen von Verbindungsschienen enthalten können, und zwar solche Verbindungsschienen, bei den der Anschluß für die Stromschiene tief, und solche Schienen bei denen der Anschluß für die Stromschienen hoch liegt, bezogen auf die Tragschiene. Für jede Ausgestaltung ist ein eigenes Gehäuse und damit eine eigene Netzklemme erforderlich.

Aufgabe der Erfindung ist es, eine Netz- oder Einspeiseklemme der eingangs genannten Art zu schaffen, die in der Verwendung einfacher ist und bei der lediglich eine einzige Einspeiseklemme vorgesehen sein muß.

Diese Aufgabe wird erfindungsgemäß gelöst durch die kennzeichnenden Merkmale des Anspruches 1.

Erfindungsgemäß also ist in jedem Gehäuse eine der Anzahl der Phasen entsprechende Anzahl von Verbindungsschienen voneinander isoliert übereinander angeordnet, so daß lediglich ein einziges Gehäuse auch für eine dreipolige oder dreiphasige Einspeiseklemme erforderlich wird. Die Verbindungsschienen, die quer zur Anreihrichtung der Schaltgeräte bzw. quer zu dem Verlauf der Normprofiltragschiene ausgerichtet sind, besitzen an einem Ende eine Anschlußklemme für Kabel und am anderen Ende sind Stromschienen befestigt, die übereinander angeordnet und in geeigneter Weise so abegekröpft sind, daß ihre Anschlußfahne mit jeweils einem elektrischen Schaltgerät in Verbindung gebracht werden kann.

Erfindungsgemäß besitzt jede Verbindungsschiene an der Seite, an der die Stromschiene anschließt, zusätzlich auch eine Anschlußklemme für Kabel.

Eine besonders vorteilhafte Ausgestaltung der Erfindung kann dahin gehen, daß die Verbindungsschienen und die Stromschienen einstückig miteinander geformt sind. Dadurch ist die Herstellung der Einspeiseklemme vereinfacht.

Eine weitere Vereinfachung der Einspeiseklemme kann dahin gehen, daß die Anschlußklemmen durch Anschlußquader mit geeigneten Ausnehmungen ebenfalls einstückig an den Verbindungsschienen angeformt sind.

Durch die Anordnung der Klemmstellen übereinander wird die Einspeisung für drei Phasen auf ein einziges Modul reduziert, so daß die Einspeiseklemme mit ihrem Gehäuse eine Modulbreite von 17,5 mm aufweist. Nach VDE 0100 (§ 30b) 4 müssen die Klemmstellen so angeordnet sein, daß nach dem Errichten bzw. Verdrahten jede Klemme einzeln zugänglich ist. Dies wird durch die erfindungsgemäße Ausgestaltung der Einspeiseklemme erreicht.

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigen:

Figur 1    eine    perspektivische    Darstellung dreier nebeneinander angeordneter Leitungsschutzschalter und

Figur 2    eine perspektivische Darstellung der Einspeiseklemme ohne Gehäuse.

In einer elektrischen Installationseinrichtung ist eine Normprofiltragschiene 10, die als Hutprofiltragschiene ausgebildet ist, vorgesehen, auf der drei Leitungsschutzschalter 11, 12 und 13 in an sich bekannter Weise aufgeschnappt sind. Die Leitungsschutzschalter besitzen Anschlußklemmen, insbesondere für elektrische Kabelleiter an einem Ende, und auf der anderen Seite besitzt jeder Leitungsschutzschalter 11, 12 und 13 Anschlußklemmen 17, 18 und 19, die sowohl zum Anschluß von Stromsammelschienen, als auch zum Anschluß von Kabelleitern ausgebildet ist. Jeder Leitungsschutzschalter besitzt einen im wesentlichen T-förmigen Körper mit einem Sockel 20 und an der Schmalseite des Sockels 20 ist je eine Öffnung 21 vorgesehen, in die die Anschlußfahne 22, 23 und 24 je einer Stromschiene 25, 26 und 27 eingesetzt und mit der Klemme 17, 18 und 19 verklemmt werden kann.

Die Stromschienen 25, 26 und 27 sind an Verbindungsschienen 28, 29 und 30 angebracht, die im einzelnen wie folgt aufgebaut sind:
Die Stromschiene 25 ist in einer Ebene U-förmig geformt, wobei ein Schenkel die Anschlußfahne 22 und ein anderer Schenkel 31 ist mit einer Anschlußklemme 32 verbunden, die damit eine Verbindung zwischen der Stromschiene 25, dem Schenkel 31 und der Verbindungsschiene 28 bildet.

Die Stromschiene 26 besitzt ebenfalls eine etwa U-förmige Form im Grundriß, wobei der Steg 33 an der Ebene der U-Form herausragend Z-förmig abgekröpft ist, wobei an dem freien Schenkel der Z-Form die Anschlußfahne 23 angeformt ist. Die Anschlußfahne 23 bildet somit den einen Schenkel der U-Form. Der andere Schenkel 34 der U-Form der Stromschiene 26 ist mit einer Anschlußklemme 35 verbunden, wobei dort eine eigentliche Verbindungsschiene nicht vorhanden ist. Der Steg 33 befindet sich vertikal unterhalb der Stromschiene 25 und der Schenkel, der die Anschlußfahne 23 bildet, befindet sich in der Ebene der Stromschiene 25. Der Steg 33 der Stromschiene 26 ist entsprechend der Modulbreite verlängert ausgebildet, so daß die Anschlußfahne 23 unmittelbar neben der Anschlußfahne 22 zu liegen kommt.

Vertikal oberhalb der Stromschiene 26 befindet sich die Stromschiene 27, die ebenfalls Z-förmig ausgebildet ist; der freie Schenkel der Z-Form befindet sich in Höhe der Anschlußfahnen 22 und 23 und bildet in seiner Verlängerung die Anschlußfahne 24. Die Stromschiene 27 ist direkt an einer Anschlußklemme 36 angeschlossen, die an der Verbindungsschiene 30 angeformt ist.

Die Stege 33 und der Steg der Stromschiene 25 sowie die Stromschiene 27 liegen vertikal direkt übereinander; die Anschlußklemmen 36, 32 und 35 sind gegeneinander versetzt angeordnet.

An der Verbindungsschiene 30 ist am entgegengesetzten Ende eine weitere Anschlußklemme 40, an der Verbindungsschiene 28 eine Anschlußklemme 41 und mit der Anschlußklemme 35 einstückig verbunden ist eine Anschlußklemme 42, so daß dort dazwischen eine eigentliche Verbindungsschiene 29 nicht vorhanden ist, sondern die Verbindungsschiene 29 quasi durch die Verbindung der beiden Klemmen 35 und 42 erzeugt wird.

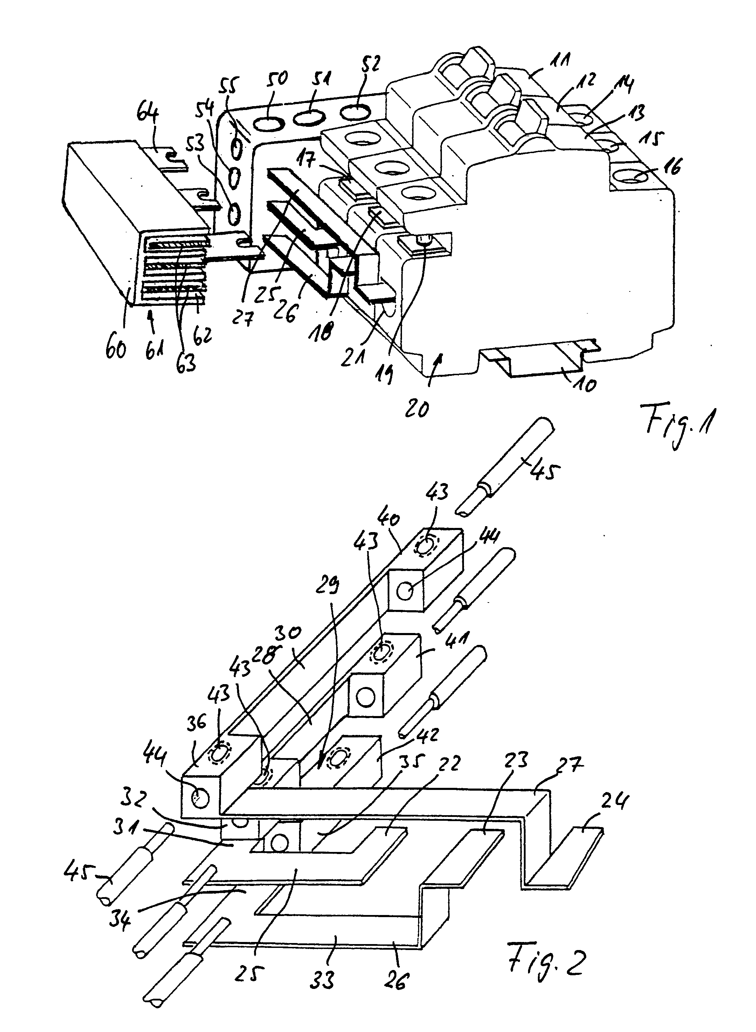

Jede Anschlußklemme besitzt eine in Figur 2 senkrecht verlaufend dargestellte Gewindebohrung 43 und eine senkrecht zu dieser Gewindebohrung und in Figur 2 horizontal verlaufend dargestellte Eingangsbohrung 44, in die ein Anschlußdraht 45 eingeschoben und darin verklemmt werden kann. Die Verbindungsschienen 28 und 30 fluchten mit einer seitlichen Längskante, so daß bei übereinander und versetzt zueinander angeordneten Anschlußklemmen die Gewindebohrungen 43 alle Anschlußklemmen einem Schraubendreher zugänglich sind. Demgemäß verlaufen die verbindungsschienen 30 und 28 hochkant übereinander.

Ebenso wie die Anschlußklemmen 40, 41 und 42 besitzen auch die Anschlußklemmen 36, 32 und 35 die Gewindebohrungen 43 sowie senkrecht dazu verlaufende Bohrungen 44, in die Verbindungs- bzw. Anschlußkabel 45 auf der entgegengesetzten Seite eingesetzt und damit verbunden werden können.

Die Verbindungsschienen 30, 28 und 29 sowie die Anschlußklemmen 36, 35, 32 und 42, 41 und 40 sind in einem Gehäuse isoliert voneinander untergebracht, in dem Öffnungen 50, 51 und 52 von oben und Öffnungen 53, 54 und 55 von der Seite, also von der Schmalseite des Gehäuses eingebracht sind, durch die die Klemmschrauben, die in die Gewindebohrungen 43 eingeschraubt sind, und die Durchbrüche oder Öffnungen 44 zugänglich sind.

Man erkennt dies in der Figur 1.

An die Klemmschrauben 17, 18 und 19 kann ein Sammelschienenblock 60 angesetzt werden, der weitere, in der Figur 1 nicht gezeigte Leitungsschutzschalter phasenweise verbindet. Der Sammelschienenblock 60 besteht aus einem isolierenden Gehäuse 61 mit einzelnen Kammern 62, in denen Stromschienen 63 eingesetzt sind, die Anschlußfahnen 64 zum Festklemmen an den Leitungsschutzschaltern 11, 12 und 13 aufweisen.

Man erkennt, das die Anordnung so getroffen ist, daß die Breite des Gehäuses für die Einspeiseklemme eine Modulbreite mit 17,5 mm ist. Die Anordnung der Klemmstellen ist dabei übereinander und die Klemmstellen sind nach dem Verdrahten noch zugänglich. Das Einspeisegehäuse ist so ausgebildet, daß es auf der Hutprofilschtragschiene aufgeschnappt werden kann.

**Patentansprüche**

1. Auf einer Normprofiltragschiene befestigbare, neben einer Anreihung von elektrischen Installationsschaltgeräten angeordnete Netz- oder Einspeiseklemme, mit wenigstens innerhalb eines Gehäuses quer zur Tragschiene und zur Anreihrichtung verlaufenden Verbindungsschiene, an deren einem Ende je eine Anschlußklemme und an deren anderem Ende je eine in Anreihrichtung verlaufende Stromschiene mit wenigstens einer Anschlußfahne für ein Schaltgerät vorgesehen ist, dadurch gekennzeichnet, daß in jedem Gehäuse eine der Anzahl der Phasen entsprechende Anzahl von Verbindungsschienen (28, 29, 30) voneinander isoliert - senkrecht zur Normprofiltragschiene (10) gesehen - übereinander angeordnet sind, daß an jeder Verbindungsschiene je eine Stromschiene (25, 26, 27) angebracht ist, so daß eine der Anzahl der Verbindungsschienen entsprechende Anzahl von Stromschienen auf einer Seite der Reihe der Schaltgeräte - senkrecht zur Normprofiltragschiene gesehen - übereinander angeordnet ist, wobei die Stromschienen so abgekröpft sind, daß ihre Anschlußfahnen (22, 23, 24) zum Schaltgerät in einer Ebene liegen, und daß zusätzlich auch auf der Seite der Einspeiseklemme, auf der die Stromschienen liegen, jeder Verbindungsschiene eine weitere Anschlußklemme zugeordnet ist.

2. Einspeiseklemme nach Anspruch 1, dadurch gekennzeichnet, daß die Stromschienen (25, 26, 27) und die Verbindungsschienen (28, 29, 30) einstückig miteinander ausgebildet sind.

3. Einspeiseklemme nach Anspruch 2, dadurch gekennzeichnet, daß die Anschlußklemmen (32, 35, 36; 41, 42, 40) mit den Verbindungsschienen (28, 29, 30) und den Stromschienen (25, 26, 27) einstückig ausgebildet sind.

4. Einspeiseklemme nach einem der vorherigen Ansprüche, dadurch gekennzeichnet, daß die Einführöffnungen (44) an den Anschlußklemmen (32, 35, 36; 41, 42, 40) für die Anschlußkabel (45) bezogen auf die Ebene der Normprofiltragschiene (10) übereinander angeordnet sind.

5. Einspeiseklemme nach Anspruch 4, dadurch gekennzeichnet, daß die Anschlußklemmen - senkrecht zur Normprofiltragschiene gesehen - übereinander und - senkrecht zur Normprofiltragschiene gesehen - horizontal zueinander versetzt innerhalb des Gehäuses angeordnet sind.

Fig. 1

Fig. 2